# EUROPEAN PATENT APPLICATION

(11) **EP 4 679 820 A1**
(43) Date of publication of application: **14.01.2026**
(21) Application number: 24187338.9
(22) Date of filing: 09.07.2024
(51) Int. Cl.: H04N 17/00, G06T 7/73, G06T 7/80, H04N 7/18, H04N 23/61, H04N 23/90, H04N 23/661, G06T 7/55

(54) **SYSTEM AND METHOD FOR MULTI-CAMERA CALIBRATION**

(71) Applicant: Koninklijke Philips N.V., 5656 AG Eindhoven (NL)
(72) Inventor: VAREKAMP, Christiaan, 5656 AG Eindhoven (NL); OOMEN, Arnoldus Werner Johannes, 5656 AG Eindhoven (NL)
(74) Representative: Philips Intellectual Property & Standards

(57) **Abstract**

A system and method for multi-camera capture. A spatially varying pattern is displayed on a first wirelessly-connected device and captured in video sequences acquired by a plurality of cameras. Each camera is provided in a respective further wirelessly-connected device. The video sequences are processed to identify the displayed spatially varying pattern, and the spatially varying pattern is used to determine an initial relative pose of each camera.

## Description

### FIELD OF THE INVENTION

The invention relates to the field of multi-camera systems.

### BACKGROUND OF THE INVENTION

Multi-camera systems are used to image a scene from multiple viewpoints, allowing 3D reconstruction of the scene. Many multi-camera systems are designed to operate in a controlled environment with a floor and background of a specific color, using cameras mounted on a dedicated structure that allows limited camera movement. Further, multi-camera systems designed to capture motion have a global trigger for synchronous capture.

There is a desire for more flexible multi-camera systems.

### SUMMARY OF THE INVENTION

The invention is defined by the claims.

According to examples in accordance with an aspect of the invention, there is provided a method for multi-camera capture, the method comprising: generating a spatially varying pattern; controlling a first wirelessly-connected device to provide a display of the spatially varying pattern; obtaining a plurality of video sequences of a scene containing the first wirelessly-connected device, each acquired by a respective camera provided in a respective further wirelessly-connected device, wherein each video sequence captures the display of the spatially varying pattern; processing each video sequence to identify the display of the spatially varying pattern in the video sequence; and processing the identification of the display of the spatially varying pattern in each video sequence to determine an initial relative pose of each camera.

One reason for using a dedicated multi-camera rig for obtaining multiple views of a scene is the difficulty in calibrating cameras having positions that are entirely unknown. Structure from Motion techniques require a considerable initial overlap in the field of view of each camera in order to find enough feature correspondences to determine the camera poses, and also cannot cope with large differences in the view angle relative to the scene between different views, as this results in the appearance of features differing too much between views due to occlusion, perspective shape change and reflectance as a function of view angle. For example, a large viewing angle change can cause large distortions in the appearance of a textured pattern on a planar surface; a feature detector may not recognize the distorted version of the pattern.

The inventors have recognized that the presence of a spatially-varying pattern in the scene can be used to calibrate cameras, provided the pattern is within the field of view of each camera at least for an initial calibration step.

This allows volumetric video data to be obtained using cameras of connected devices (e.g. smartphones or tablets), rather than requiring a dedicated multi-camera apparatus with controlled relative positions and orientations.

By controlling a first device to display a spatially varying pattern and further devices to acquiring video sequences that capture this display, volumetric video data may be obtained for a wide variety of scenes.

Preferably, the spatially varying pattern is spatially varying in two dimensions.

The wirelessly-connected devices may be wirelessly-connected mobile devices (e.g. smartphones and/or tablets).

In some examples, the method further comprises processing the video sequences to synchronize the video sequences.

A further difficulty when not using a dedicated multi-camera rig to obtain volumetric video data is lack of synchronization between the video sequences acquired by different cameras.

In some examples, the method further comprises controlling the first wirelessly-connected device to provide a change in the spatially varying pattern displayed by the first wirelessly-connected device; and the step of synchronizing the video sequences comprises: identifying a frame in each video sequence in which the change in the spatially varying pattern is captured; and synchronizing the identified frames.

The inventors have recognized that the pattern may be used to synchronize the video sequences by changing the displayed pattern and using the change in pattern as a reference point in time.

In some examples, the method further comprises processing the identified frames to determine a sub-frame offset between the plurality of cameras.

The sub-frame offset may be used to improve 3D calibration and reconstruction.

In some examples, the method further comprises controlling at least one of the plurality of further wirelessly-connected devices to adjust a frame rate of the respective camera based on the determined sub-frame offset.

In this way, sub-frame synchronization may be achieved, improving the accuracy of 3D estimation for moving objects in the scene.

In some examples, the step of synchronizing the video sequences comprises: controlling one of the plurality of further wirelessly-connected devices to display a temporally-modulated indicator; processing the video sequence acquired by each remaining further wirelessly-connected device to identify a reflection of the temporally-modulated indicator in the video sequence; and synchronizing the video sequences based on the identified reflection of the temporally-modulated indicator.

The inventors have recognized that, when using a device to film a scene, a user typically holds the device such that the display of the device illuminates the face of the user. Thus, the video sequence from any other device filming the scene from a direction that captures the illumination can be synchronized by using a change in the temporally-modulated indicator as a reference point in time.

Additionally or alternatively, the internet clock, motion in the scene and/or audio signals associated with the video sequences may be used to synchronize the video signals.

In some examples, the spatially varying pattern is a QR code.

The use of a QR code may facilitate both identification and calibration. For instance, a QR code may facilitate obtaining the video sequences from the cameras of the further wirelessly-connected devices, by initializing a web-based application that allows a central server to identify the mobile devices as a multi-camera system. Further, the standardization of QR codes has led to their broad availability in software development kits for various operating systems.

In some examples, the method further comprises processing the video sequences and the initial relative pose of each camera using a structure-from-motion algorithm to determine an updated relative pose for each camera.

This allows the initial relative position of each camera to be refined using other features in the video sequences. Further, the step of determining an updated relative position for each camera may be repeated (e.g. continuously or at regular intervals) to account for movement of the mobile devices.

In some examples, the method further comprises: processing the video sequences to identify a desired change in pose for at least one of the plurality of further wirelessly-connected devices; and in response to identifying a desired change in pose for at least one of the plurality of further wirelessly-connected devices, controlling one or more devices to provide a user-perceptible output indicative of each identified desired change in pose.

In this way, users of the mobile devices may be guided to positions that provide improved volumetric video data of the scene.

In some examples, the user-perceptible output indicative of each identified desired change in position may be provided by controlling each further wirelessly-connected device for which a desired change in position has been identified to provide the user-perceptible output indicative of the respective desired change in position. Alternatively, the user-perceptible output may be provided by a different device (e.g., a central device, such as the first wirelessly-connected device displaying the spatially varying pattern). In other words, the one or more devices may comprise one or more of the plurality of further wirelessly-connected devices, the first wirelessly-connected device and/or another device.

In some examples, the desired change in pose for the at least one further wirelessly-connected device is identified based on a desired viewing angle.

In this way, the users of the mobile devices may be guided to achieve a more uniform sampling over the desired viewing angle.

The desired viewing angle may be determined based on a current pose of the connected devices, or defined via user input.

In some examples, the method further comprises processing the video sequences to identify an object of interest; and the desired change in pose for the at least one further wirelessly-connected device is identified based on the identified object of interest.

For instance, the user of a wirelessly-connected device may be guided to move the wirelessly-connected device closer to or further from the object of interest, or to move to avoid occlusion of the object of interest.

In some examples, the method further comprises processing the video sequences to identify a desired change in at least one intrinsic parameter of at least one of the plurality of cameras; and controlling each further wirelessly-connected device for which a desired change in at least one intrinsic parameter has been identified to change the respective at least one intrinsic parameter.

In this way, adjustments to improve the quality of the volumetric video data can be made automatically. For instance, the at least one intrinsic parameter may comprise one or more of: an optical zoom, an exposure time, a frame rate, an encoding bitrate, an analog-to-digital gain and/or a color correction parameter.

In some examples, each video sequence is accompanied by an audio signal acquired by one or more microphones of the respective further wirelessly-connected device; and the method further comprises: processing the video sequences and the relative positions of each camera to determine a position of each microphone within the scene; processing the audio signals, using the determined position of each microphone, to generate an audio mix for a desired position within the scene.

The inventors have recognized that the calibration of the cameras enables the positions of microphones acquiring audio signals alongside the video sequences to be known, and that the positions of the microphones may be used to combine the audio signals in a way that is representative of the sound at a particular location in the scene.

In some examples, the method further comprises: generating a further spatially varying pattern; controlling a second wirelessly-connected device to provide a display of the further spatially varying pattern; and processing each video sequence to identify the display of the further spatially varying pattern in the video sequence; and the determination of the initial relative pose of each camera is further based on the identification of the display of the further spatially varying pattern in each video sequence.

This further improves the robustness of the determination of the initial relative pose of each camera.

According to examples in accordance with another aspect of the invention, there is provided a processing system for multi-camera capture, the processing system being configured to: generate a spatially varying pattern; control a first wirelessly-connected device to provide a display of the spatially varying pattern; obtain a plurality of video sequences of a scene containing the first wirelessly-connected device, each acquired by a respective camera provided in a respective further wirelessly-connected device, wherein each video sequence captures the display of the spatially varying pattern; process each video sequence to identify the display of the spatially varying pattern in the video sequence; and process the identification of the display of the spatially varying pattern in each video sequence to determine an initial relative pose of each camera.

According to examples in accordance with yet another aspect of the invention, there is provided a method for multi-camera capture, the method comprising: obtaining a plurality of video sequences of a scene, each acquired by a respective camera provided in a respective wirelessly-connected device, wherein each video sequence captures a landmark in the scene having a spatially varying pattern; processing each video sequence to identify the landmark in the video sequence; and processing the identification of the landmark in each video sequence to determine an initial relative pose of each camera.

The landmark may be any landmark having a spatially varying pattern suitable for calibrating cameras. For instance, the landmark may be a spatially varying pattern (e.g., a QR code) displayed on an electronic device or printed on an object in the scene (e.g. on a sheet of paper), or may be an object that happens to have a spatially varying pattern (e.g., a football goal, a clock, a TV/display mounted on a post or an e-ink display that can be placed on the ground or mounted on the wall showing a spatially varying pattern, etc.).

In some examples, the method may further comprise synchronizing the video sequences, wherein the synchronization of the video sequences is initiated by the identification of the landmark.

In some examples, the method may further comprise processing the video sequences to identify a desired change in pose for at least one of the plurality of wirelessly-connected devices; and, in response to identifying a change in pose for at least one of the plurality of wirelessly-connected devices, controlling one or more devices to provide a user-perceptible output indicative of each identified desired change in pose.

According to examples in accordance with yet another aspect of the invention, there is provided a processing system for multi-camera capture, the processing system being configured to: obtain a plurality of video sequences of a scene, each acquired by a respective camera provided in a respective wirelessly-connected device, wherein each video sequence captures a landmark in the scene having a spatially varying pattern; process each video sequence to identify the landmark in the video sequence; and process the identification of the landmark in each video sequence to determine an initial relative pose of each camera.

There is also proposed a computer program product comprising computer program code means which, when executed on a computing device having a processing system, cause the processing system to perform all of the steps of any method described above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a system for multi-camera capture, according to an embodiment of the invention;
Fig. 2 illustrates a pattern displayed by a first wirelessly-connected device over time;
Fig. 3 illustrates a method for multi-camera capture, according to an embodiment of the invention;
Fig. 4 illustrates a system for multi-camera capture, according to another embodiment of the invention; and
Fig. 5 illustrates a method for multi-camera capture, according to another embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a system and method for multi-camera capture. A spatially varying pattern is displayed on a first wirelessly-connected device and captured in video sequences acquired by a plurality of cameras. Each camera is provided in a respective further wirelessly-connected device. The video sequences are processed to identify the displayed spatially varying pattern, and the spatially varying pattern is used to determine an initial relative pose of each camera.

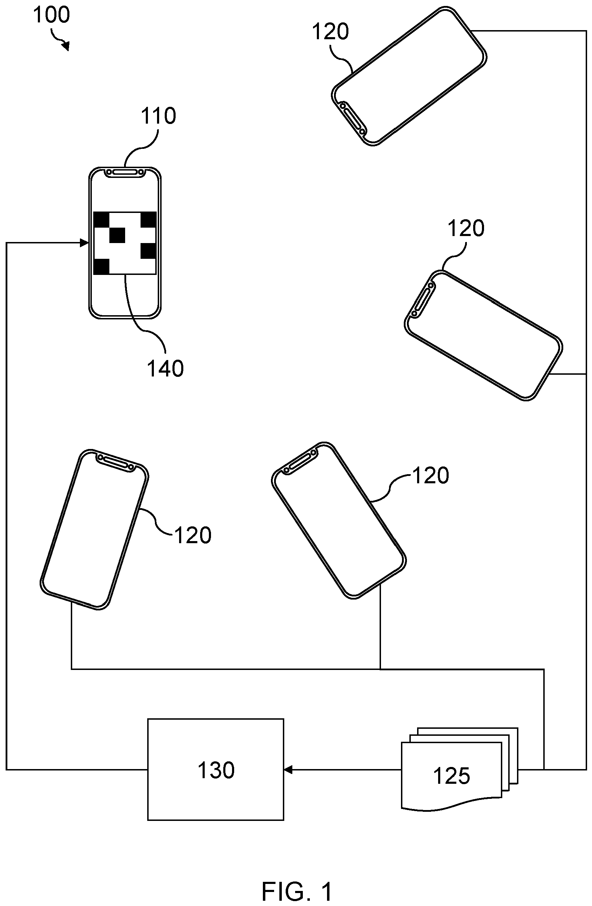

Fig. 1 illustrates a system 100 for multi-camera capture, according to an embodiment of the invention. The system 100 comprises a first wirelessly-connected device 110, a plurality of further wirelessly-connected devices 120, and a processing system 130. The processing system 130 is, itself, an embodiment of the invention.

The first wirelessly-connected device 110 comprises a display. Each of the plurality of further wirelessly-connected devices 120 comprises a camera. In some examples, each of the plurality of further wirelessly-connected devices may also comprise a display. In some examples, the first wirelessly-connected device may also comprise a camera.

The first wirelessly-connected device and the plurality of further wirelessly-connected devices may each be a mobile wirelessly-connected device (e.g., a smartphone or a tablet or a body worn/ head mounted camera). In other examples, the first wirelessly-connected device and/or one or more of the further wirelessly-connected devices may be mounted in a fixed position (for instance, the first wirelessly-connected device may be a wirelessly-connected signage display, e.g. in a shopping mall or airport). In the case of a fixed-mounted first wirelessly-connected device, this provides a stationary target for calibration; further, fixed-mounted display devices typically have larger displays than mobile devices, providing a larger calibration target.

In Fig. 1, the system 100 has four further wirelessly-connected devices 120. However, the skilled person will readily appreciate that any number (equal to or greater than two) of further wirelessly-connected devices with cameras may be used in the system 100. Further, as detailed below, the number of further wirelessly-connected devices in the system 130 may initially be unknown to the processing system 130.

The processing system 130 may be (at least in part) provided in the first wirelessly-connected device 110 or any of the plurality of further wirelessly-connected devices 120. Additionally or alternatively, the processing system 130 may be provided in one or more other devices (for instance, the processing system 130 may be a cloud-based processing system). The first wirelessly-connected device and the plurality of further wirelessly-connected devices may each (with the exception of any wirelessly-connected device comprising the processing system 130) be configured to communicate with the processing system 130 via any suitable wireless communication protocol.

The processing system 130 is configured to generate a spatially varying pattern 140, and to control the first wirelessly-connected device 110 to provide a display of the spatially varying pattern (i.e., on the display of the first wirelessly-connected device).

In some examples, the processing system 130 may be configured to generate the spatially varying pattern 140 in response to receiving a request from the first wirelessly-connected device 120. The request from the first wirelessly-connected device may, for example, be initiated by a user input to the first wirelessly-connected device (e.g., using an application running on the first wirelessly-connected device).

The spatially varying pattern 140 may be any spatially varying pattern that can be distinguished in a scene by automated image analysis. Preferably, the spatially varying pattern may be spatially varying in two dimensions; for instance, the spatially varying pattern may be a checkerboard pattern, a pictogram or a 2D barcode. In some examples, the spatially varying pattern may be a QR (quick response) code.

The spatially varying pattern may have a high frequency spatial variation. The frequency of the spatial variation may depend on a size of the display of the first wirelessly-connected device and/or on an expected distance between the first wirelessly-connected device and the further wirelessly-connected device (e.g. the frequency of the spatial varying pattern may be such that at least one pixel of an image of the spatial varying pattern captured by a further wirelessly-connected device has a different color to pixels on either side).

While the first wirelessly-connected device 110 is displaying the spatially varying pattern, the respective camera of each of the plurality of further wirelessly-connected devices 120 is used to acquire a video sequence 125 of a scene containing the first wirelessly-connected device, each video sequence capturing the display of the spatially varying pattern 140 by the first wirelessly-connected device (i.e., at least one frame of each video sequence captures the spatially varying pattern). For instance, the first wirelessly-connected device may be placed on the ground in the scene with the display facing upwards (i.e. away from the ground), or a user of the first wirelessly-connected device may hold the first wirelessly-connected device such that the display of the spatially varying pattern is visible from various points in the scene.

The processing system 130 is configured to obtain the video sequence 125 acquired by the camera of each of the plurality of further wirelessly-connected devices 120, and to process each video sequence to identify the display of the spatially varying pattern in the video sequence. In Fig. 1, the processing system obtains the video sequences directly from the plurality of further wirelessly-connected devices; however, as the skilled person will readily appreciate, in some examples, the processing system may obtain the video sequences via one or more other devices (e.g., a memory unit). In some examples, the processing system may be configured to obtain and process each frame of each video sequence as the frame is acquired (i.e., the processing system may continuously obtain each video sequence during filming and process each video sequence in real time or near real time). In order for the processing system 130 to obtain each video sequence 125, the processing system must first connect to the respective further wirelessly-connected devices 120. As mentioned above, in some examples, the spatially varying pattern 140 may be a QR code; scanning the QR code using the further wirelessly-connected device may initialize or direct a user of the further wirelessly-connected device to an application (e.g., a web-based application) that facilitates a connection between the respective further wirelessly-connected device and the processing system. In other examples, the first wirelessly-connected device 110 may be used to send an invitation (e.g. via a messaging application) to each further wirelessly-connected device, for example, containing a URL to an application that facilitates a connection between the respective further wirelessly-connected device and the processing system, or each further wirelessly-connected device may connect to the processing system using a pre-installed application. Further methods for connecting the processing system to the further wirelessly-connected devices will be apparent to the skilled person.

The identification of the spatially varying pattern 140 by the processing system 130 may depend on the nature of the pattern. For instance, where the spatially carrying pattern is a QR code, the spatially varying pattern may be identified using any suitable technique for QR code detection. QR codes are standardized, and many operating systems for mobile devices provide built-in support for automatically recognizing and interpreting QR codes. For other patterns, the spatially varying pattern may be identified using a suitable image analysis algorithm (e.g. a recognition algorithm). For example, a pattern consisting of black circles on a white background may be identified by performing circle detection; after identifying a location and relative position of each circle, a check can be passed on the number of circles, the sizes of the circles and the relative distances between circles.

In some examples, the processing system 130 may be configured to generate a unique spatially varying pattern 140 for the first wirelessly-connected device 110; the processing system may then identify the plurality of further wirelessly-connected devices 120 as belonging to a single group (i.e., for the purpose of camera calibration/3D reconstruction) based on the spatially varying pattern (i.e., the processing system 130 may identify any further wirelessly-connected device for which an acquired video sequence captures the unique spatially varying pattern as belonging to the group). Additionally or alternatively, the processing system 130 may be configured to obtain location information (e.g., GPS coordinates or proximity information using e.g., Bluetooth) for each of the plurality of further wirelessly-connected devices, and identify the plurality of further wirelessly-connected devices as belonging to a single group based on the location information.

Having identified the display of the spatially varying pattern 140 in each video sequence, the processing system 130 is configured to process the identification of the display of the spatially varying pattern in each video sequence to determine an initial relative pose of each camera (i.e., the camera of each further wirelessly-connected device 120).

The processing system 130 may be configured to determine the initial relative pose by defining a local 3D coordinate system for the display of the spatially varying pattern 140 and a local 3D coordinate system for each camera. The processing system may use intrinsic parameters for each camera (i.e. at least the focal length and principle point of the camera) to define the local 3D coordinate system for the respective camera. For instance, the processing system may receive the intrinsic parameters for each camera from the respective wirelessly-connected device 120 containing the camera. If the intrinsic parameters for any camera are not available to the processing system, the processing system may be configured to make assumptions relating to the intrinsic parameters of the camera.

The spatially varying characteristics of the spatially varying pattern may then be used to align the local 3D coordinate system for the display of the spatially varying pattern with the local 3D coordinate system for each camera (i.e., based on the appearance of the spatially varying pattern in each video sequence) in order to determine the initial relative pose of each camera.

Provided that the first wirelessly-connected device 110 has a flat display, the local 3D coordinate system for the display of the spatially varying pattern 140 may be defined using the knowledge that the spatially varying pattern lies in a flat plane. Where the spatially varying pattern is a QR code, a local 3D coordinate system for the display of the spatially varying pattern may be defined automatically when the QR code is identified (for instance using an open-source computer vision libraries, such as OpenCV).

Preferably (particularly when the scene contains fast-moving objects), the processing system may determine the initial relative pose of each camera using frames of the video sequences acquired at (at least approximately) the same time. Frames of the video sequences acquired at the same time may be identified by synchronizing the video sequences, as described below.

In some examples, each video sequence (or at least the frame of each video sequence used to determine the initial relative poses) may be upscaled before determining the initial relative pose of each camera (e.g., using a deep-learning-based upscaling technique), in order to improve a precision of the initial relative pose.

In some examples, if the first wirelessly-connected device 110 comprises a camera (and particularly where the camera is on a same side of the first wirelessly-connected device as the display, such as where the first wirelessly-connected device is a smartphone with a front-facing camera), the camera of the first wirelessly-connected device may also be used to acquire a video sequence of the scene, and the processing system 130 may additionally be configured to acquired the video sequence of the scene. The initial relative pose of the camera of the first wirelessly-connected device may be determined based on the video sequences acquired by the further wirelessly-connected devices 120 (i.e. by determining the depth of the spatially varying pattern in the video sequences).

In some examples, if the first wirelessly-connected device comprises a camera and at least one of the further wirelessly-connected devices 120 comprises a display, which wirelessly-connected device is considered to be the first wirelessly-connected device (i.e. which wirelessly-connected device displays the spatially varying pattern 140) may change over time. In other words, the system 100 may comprise a plurality of wirelessly-connected devices, each comprising a display and a camera, and the processing system 130 may be configured to control one of the wirelessly-connected devices to display the spatially varying pattern 140 during a first time period and control another of the wirelessly-connected devices to display the spatially varying pattern during a second time period. In each time period, each wirelessly-connected device that is not currently displaying the spatially varying pattern may be used to acquire a video sequence capturing the display of the spatially varying pattern.

In some examples, the system 100 may further comprise a second wirelessly-connected device having a display, and the processing system 130 may be configured to generate a further spatially varying pattern, and to control the second wirelessly-connected device to provide a display of the further spatially varying pattern (not shown in Fig. 1). The second wirelessly-connected device may be placed within the scene such that each video sequence 125 captures both the display of the spatially varying pattern 140 and the display of the further spatially varying pattern, and the determination of the initial pose of each camera may be further based on an identification of the display of the further spatially varying pattern in each video sequence. In some examples, the second wirelessly-connected device may be one of the further wirelessly-connected devices.

For instance, the processing system may define a local coordinate system for the display of the spatially varying pattern 140, a local 3D coordinate system for the display of the further spatially varying pattern and a local 3D coordinate system for each camera, and align the local 3D coordinate systems for the display of the spatially varying pattern 140, the display of the further spatially varying pattern and each camera, using the spatially varying characteristics of the spatially varying pattern 140 and of the further spatially varying pattern, to determine the initial relative pose for each camera.

In some examples, the processing system 130 may be further configured to process the video sequences 125 and the initial relative pose of each camera using a structure-from-motion algorithm to determine an updated relative pose for each camera. In other words, the processing system may determine, for each camera, any movement and/or rotation of the camera with respect to the initial pose of the camera based on features in the video sequence acquired by the camera, and determined the updated relative pose by modifying the initial pose according to any identified movement and/or rotation of the camera.

The processing system 130 may be configured to determine an updated relative pose for each camera continuously (i.e. for every frame in the video sequence acquired by the respective camera after the frame used to determine the initial relative pose).

The structure-from-motion algorithm may also be used to determine a 3D position for one or more features in the scene (e.g., a 3D position of one or more key points for each of one of more objects in the scene).

The processing system 130 may be configured to process the video sequences 125 and the relative pose(s) of each camera (i.e., the initial relative pose of each camera and, where available, each updated relative pose) to generate a 3D reconstruction of the scene. Alternatively, the processing system 130 may be configured to transmit the video sequences and the relative pose(s) of each camera, and a 3D reconstruction of the scene may be generated by another processing system that receives (e.g., directly from the processing system 130 or via a storage medium) the video sequences and the relative pose(s) of each camera.

The 3D reconstruction of the scene may be generated on a frame-by-frame basis (i.e., by processing simultaneously acquired video frames and the relative pose of each camera at the time of acquiring the simultaneously acquired video frames). Methods for generating a 3D reconstruction of a scene using a plurality of video sequences and the relative poses of the cameras used to acquire the video sequences are well known (e.g., methods involving matching correspondences between views, object segmentation, etc.), and any suitable method may be used to generate the 3D reconstruction of the scene.

In some examples, the processing system 130 may be further configured to process the video sequences 125 to synchronize (i.e., temporally synchronize) the video sequences.

In some examples, the processing system 130 is configured to synchronize the video sequences 125 using the spatially varying pattern 140. For instance, the processing system may be configured to control the first wirelessly-connected device 110 to provide a change in the spatially varying pattern displayed by the first wirelessly-connected device (i.e., the processing system may be configured to generate a first spatially varying pattern and at least one further spatially varying pattern, and to control the first wirelessly-connected device to sequentially display the first spatially varying pattern and each further spatially varying pattern). The processing system may then be configured to synchronize the video sequences by processing the video sequences to identify, in each video sequence, a frame in which the change in the spatially varying pattern is captured, and to synchronize the identified frames.

In some examples, the processing system 130 may be configured to, in response to failing to identify the change in the spatially varying pattern in at least one of the video sequences 125, control the first wirelessly-connected device 110 to provide a further change in the spatially varying pattern displayed by the first wirelessly-connected device, and to process the video sequences to identify, in each video sequence, a frame in which the further change is captured. The pattern displayed by the first wirelessly-connected device may continue to be changed until it is possible to synchronize all video sequences (e.g., until at least one change in pattern is captured by all the video sequences).

In other examples, the processing system 130 may be configured to control the first wirelessly-connected device 110 to repeatedly provide a change in the spatially varying pattern at a predetermined rate. The processing system may then identify one or more changes in the spatially varying pattern in each video sequence, and synchronize frames in which the same change in the spatially varying pattern is identified.

In some examples, the processing system 130 may be further configured to process the frames in which a change in the spatially varying pattern is identified to determine a sub-frame offset between the plurality of cameras. The sub-frame offset between the plurality of cameras may be used when generating a 3D reconstruction of the scene to improve the quality of the 3D reconstruction.

The processing system may, for example, be configured to determine a relative intensity of the spatially varying patterns within each frame (i.e., a relative intensity of the spatially varying pattern before the change and of the spatially varying pattern after the change), and to determine the sub-frame offset based on the relative intensities.

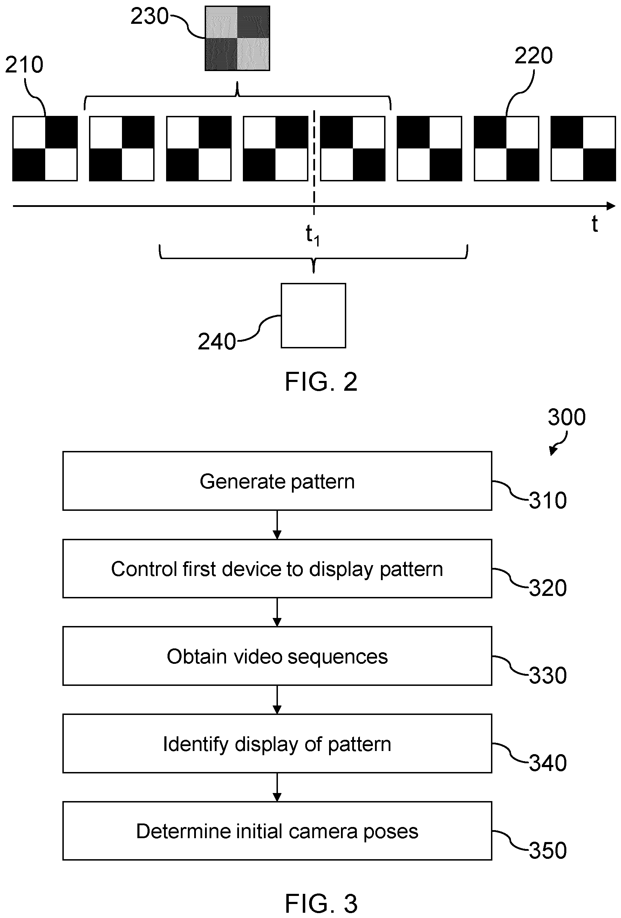

This concept is illustrated by Fig. 2, which illustrates a pattern displayed by a first wirelessly-connected device over time. Prior to time ti, a first pattern 210 is displayed; at time ti, the display changes to display a second pattern 220. Image 230 illustrates the pattern captured by a first camera of a further wirelessly-connected device in the frame capturing the change in pattern, while image 240 illustrates the pattern captured by a second camera of another further wirelessly-connected device in the frame capturing the change in pattern. Each camera has an exposure time equal to the length of four refreshes of the display of the first wirelessly-connected device.

Image 230 is a combination of the first and second patterns in which the first pattern 210 has a relative intensity of 75% and the second pattern 220 has a relative intensity of 25%. The first wirelessly-connected device therefore displayed the first pattern for 75%, and the second pattern for 25%, of the exposure time of the frame acquired by the first camera in which the change is captured.

Image 240 is a combination of the first and second patterns in which each pattern has a relative intensity of 50%. The first wirelessly-connected device therefore displayed each pattern for half of the exposure time of the frame acquired by the second camera in which the change is captured (as the first pattern 210 is the inverse of the second pattern 220, this results in the patterns cancelling each other out). The sub-frame offset between the first and second cameras is therefore equal to one quarter of the exposure time of the cameras.

In some examples, the processing system 130 may be configured to control at least one of the plurality of further wirelessly-connected devices to adjust a frame rate of the respective camera based on the determined sub-frame offset. For instance, if a non-zero sub-frame offset is determined between a first camera and a second camera, the frame rate of the first camera may be increased or decreased, so that the sub-frame offset between the cameras changes with each frame. At a moment at which the sub-frame offset between the first and second cameras is zero, the frame rate of the first camera may be adjusted again, to match the frame rate of the second camera. In this way, each frame acquired by the first camera after this point will have a sub-frame offset of zero with respect to a corresponding frame acquired by the second camera.

Other methods for synchronizing the video sequences 125 are also envisaged. For instance, the processing system 130 may be configured to control one of the plurality of further wirelessly-connected devices 120 to display a temporally-modulated indicator (providing that each of the further wirelessly-connected devices comprises a display). The processing system may then be configured to process the video sequence acquired by each remaining further wirelessly-connected device (i.e., each further wirelessly-connected device other than the further wirelessly-connected device displaying the temporally-modulated indicator) to identify a reflection of the temporally-modulated indicator in the video sequence.

The video sequences 125 may then be synchronized based on the identified reflection of the temporally-modulated indicator. For instance, a change in the indicator may be detected in each video sequence in which a reflection of the temporally-modulated indicator is visible, and the frames in which this change is detected may be synchronized with the video frame acquired by the further wirelessly-connected device displaying the temporally-modulated indicator at the time of the change.

In some examples, the video sequences 125 may additionally or alternatively be synchronized based on moving features in the scene that are captured by the video sequences, based on a time at which each frame is recorded as being captured by the respective further wirelessly-connected device (i.e., using a reference time common to the further wirelessly-connected devices, e.g., an internet clock), and/or based on audio signals associated with the video sequences (if available). Any of the methods disclosed herein for synchronizing the video sequences may be used individually, or one or more of these methods may be used in combination for improved accuracy and precision.

In some examples, the processing system 130 may be further configured to provide guidance to users of the plurality of further wirelessly-connected mobile devices 120, in order to enable users to make any adjustments that would result in improved volumetric video data of the scene. The processing system may be configured to process the video sequences in real time or near real time (i.e., during acquisition of the video sequences) in order to provide guidance during acquisition of the video sequences.

For example, the processing system 130 may be configured to process the video sequences 125 to identify a desired change in pose for at least one of the plurality of further wirelessly-connected devices 120.

In some examples, the desired change in pose for at least one of the plurality of further wirelessly-connected devices 120 may be identified based on a desired viewing angle. A desired viewing angle may be determined based on a user input (e.g., received via the first wirelessly-connected device 110 or one of the plurality of further wirelessly-connected devices). Alternatively, the desired viewing angle may be determined based on a current relative pose of each camera; for instance, the total angular range of the current relative poses may be used to define the desired viewing angle (for instance, from the poses of the cameras of the further wirelessly-connected devices 120 shown in Fig. 1, the desired viewing angle may be determined to be 180°). Having determined the desired viewing angle, the processing system 130 may identify, as a desired change in pose, a change in pose to improve the uniformity of the distribution of the cameras over the desired viewing angle.

In some examples, the desired change in pose for at least one of the plurality of further wirelessly-connected device 120 may additionally or alternatively be based on an object of interest in the scene. The processing system 130 may be configured to process the video sequences 125 to identify an object of interest, and identify any desired changes in pose for the cameras of the further wirelessly-connected devices based on the identified object of interest.

An object of interest may be identified by processing the video sequences 125 using a segmentation algorithm to identify any objects captured in the video sequences. Any object identified in the video sequences other than the first wirelessly-connected device 110, further wirelessly-connected devices 120 and users holding any of the wirelessly-connected devices may be identified as a candidate object of interest. If more than one candidate object of interest is identified, the object of interest may be selected from the candidate objects of interest based on the frequency in which the candidate objects appear in the video sequences (i.e., a candidate object that appears more frequently is more likely to be selected as the object of interest), the positions in which the candidate objects appear in the video sequences (e.g., a candidate object that typically has a central position in the video frames is more likely to be selected as the object of interest) and/or a class of object (e.g., a person may be more likely to be selected as the object of interest than an inanimate object). Alternatively, the object of interest may be defined by user input (for instance, if a further wirelessly-connected device is a device with a touchscreen that displays the field of view of the camera of the further wirelessly-connected device during video acquisition, a user of the further wirelessly-connected device may indicate a position of the object of interest in the video sequence acquired by the camera by pressing the touchscreen at a position where the object of interest appears).

Having identified the object of interest, the processing system 130 may be configured to identify, as a desired change in pose, any change in pose that would improve the view of the object of interest in the video sequences. For instance, if the object of interest is only partially captured in the field of view of any of the cameras, a desired change in pose may be to rotate the camera or move the camera away from the object of interest so that the object of interest is entirely within the field of view. If the object of interest occupies a small proportion of the field of view of any of the cameras, a desired change in pose may be to move the camera closer to the object of interest. If the object of interest is occluded from the camera of one further wirelessly-connected device by a user of another further wirelessly-connected device, a desired change in pose may be to move one or both of these devices such that there is less or no occlusion.

In some examples, the processing system 130 may be configured to determine a desired change in pose based on lighting conditions. For instance, the processing system may determine a desired change in pose to reduce glare.

In some examples, the processing system 130 may be configured to determine a desired change in pose based on one or more other considerations. For instance, the desired change in pose may be determine based on privacy considerations (e.g. to avoid capturing people that are not a target of the video sequences), and/or to provide a particular backdrop to the video sequences.

In response to identifying a desired change in pose for at least one of the plurality of further wirelessly-connected devices 120, the processing system 130 may be configured to control one or more devices to provide a user-perceptible output indicative of each identified desired change in pose.

The user-perceptible output for each identified desired change in pose may be provided by the further wirelessly-connected device 120 for which the change in pose is desired or by another device (for instance, by another further wirelessly-connected device or by the first wirelessly-connected device 110). The user-perceptible output may comprise, for example, one or more of: an image (e.g., an overlay on the display of the further wirelessly-connected device for which the change in pose is desired), a textual display, a sound (e.g., a spoken instruction) and/or a vibration. Other suitable user-perceptible outputs will be apparent to the skilled person.

In some examples, the processing system 130 may additionally or alternatively be configured to identify a desired change in at least one intrinsic parameter of at least one of the plurality of cameras (e.g., a change in optical zoom, exposure, frame rate, etc.), and control one or more devices to provide a user-perceptible output indicative of the desired change in at least one intrinsic parameter of at least one of the plurality of cameras. The user-perceptible output may be provided as described above with reference to the user-perceptible output indicative of each identified desired change in pose.

In some examples, the processing system 130 may additionally or alternatively be configured to control one or more devices to provide a user-perceptible output indicative of a desired position and/or orientation for a new further wirelessly-connected device to be added to the scene. The processing system may determine a desired position and/or orientation for a new further wirelessly-connected device in response to receiving a user input indicating an intention to add a new further wirelessly-connected device. Alternatively, the processing system may determine, based on the video sequences 125, that an additional further wirelessly-connected device is required (e.g., in order for the volumetric video data to meet a predefined quality criterion); the user-perceptible output may then indicate that an additional further wirelessly-connected device is required as well as a desired position and/or orientation for the additional further wirelessly-connected device.

In some examples, the processing system 130 may be further configured to control the plurality of further wirelessly-connected mobile devices 120, in order to automatically provide adjustments for improving the volumetric video data of the scene.

For instance, the processing system 130 may be configured to process the video sequences 125 to identify a desired change in at least one intrinsic parameter of at least one of the plurality of cameras (e.g., a change in optical zoom, exposure, frame rate, encoding bitrate, etc.). For each of the further wirelessly-connected mobile devices 120 for which a desired change in at least one intrinsic parameter of the camera has been identified, the processing system 130 may control the further wirelessly-connected mobile device to change the respective at least one intrinsic parameter according to the respective desired change.

For example, the processing system may identify that a video quality of one video sequence is lower than the quality of the other video sequences, and may determine a change in at least one intrinsic parameter for the camera that acquired the lower-quality video sequence, in order to improve the video quality. In another example, the processing system may identify that the optical zoom of one video sequence is too different to the other video sequences for the video sequences to be combined; the processing system may then control the camera that acquired the video sequence to change the optical zoom to a value closer to the optical zoom of the other camera.

In some examples, each video sequence 125 may be accompanied by an audio signal acquired by one or more microphones of the respective further wirelessly-connected device 120. In other words, each further wirelessly-connected device may simultaneously acquire the respective video sequence of the scene and an audio signal. The processing system 130 may be configured to process the video sequences and the relative positions of each camera to determine a position of each microphone within the scene, and to process the audio signals, using the determined position of each microphone, to generate an audio mix for a desired position within the scene.

The desired position of the scene may be static or dynamic. In some examples, the desired position of the scene may be defined with reference to an object in the scene (e.g., an object of interest) or with reference to one of the further wirelessly-connected devices 120.

In some examples, beamforming may be applied to the audio signals to extract any sounds belonging to an object of interest (e.g., the sound of a person talking). These extracted sounds may be treated separately in the audio mix; for example, the extracted sounds may be enhanced by changing the volume or applying an equalization.

The audio mix may be rendered alongside the 3D reconstruction of the scene. For instance, the audio mix may be rendered using biaural processing for headphone listening. The audio mix may be transported, stored and/or rendered as defined by any suitable standards, such as MPEG-SAOC, MPEG-H and MPEG- 1. In some examples, the audio mix may be transported, stored and/or rendered using Higher Order Ambisonics (HOA).

Fig. 3 illustrates a method 300 for multi-camera capture, according to an embodiment of the invention.

The method 300 begins at step 310, at which a spatially-varying pattern is generated.

At step 320, a first wirelessly-connected device is controlled to provide a display of the spatially varying pattern.

At step 330, a plurality of video sequences of a scene containing the first wirelessly-connected device are obtained. Each video sequence is acquired by a respective camera provided in a respective further wirelessly-connected device, and captures the display of the spatially varying pattern.

At step 340, each video sequence is processed to identify the display of the spatially varying pattern in the video sequence.

At step 350, the identification of the display of the spatially varying pattern in each video sequence is processed to determine an initial relative pose of each camera.

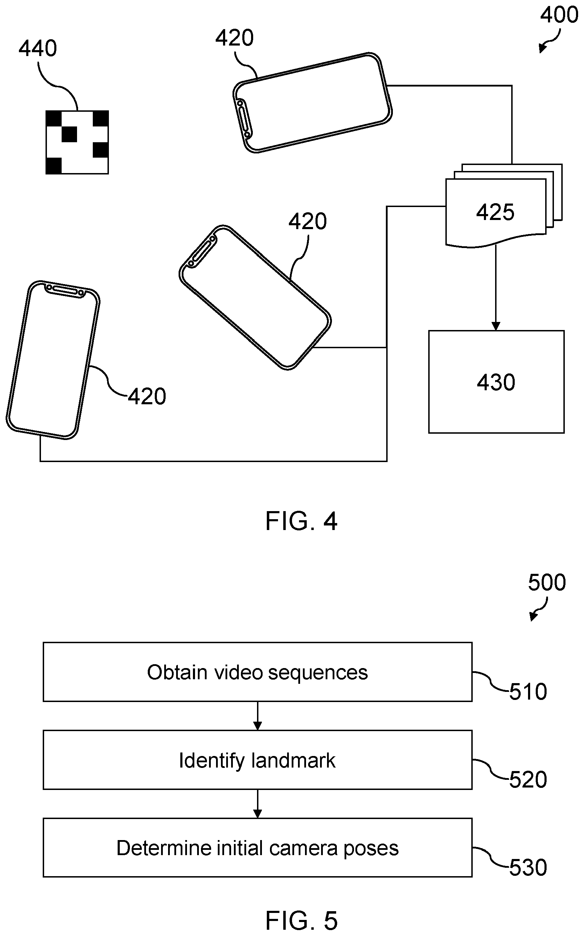

Fig. 4 illustrates a system 400 for multi-camera capture, according to another embodiment of the invention. The system 400 comprises a plurality of wirelessly-connected devices 420 and a processing system 430. The processing system 430 is, itself, an embodiment of the invention.

Each of the plurality of wirelessly-connected devices 420 comprises a camera, which is used to acquire a video sequence 425 of a scene containing a landmark 440 having a spatially varying pattern. Each video sequence captures the landmark. The spatially varying pattern may be spatially varying in two dimensions; for instance, the spatially varying pattern may be a checkerboard pattern, a pictogram or a 2D barcode. The spatially varying pattern may have a high frequency spatial variation. In some examples, the spatially varying pattern may be a QR (quick response) code.

In some examples, the landmark may be a display of another wirelessly-connected device (e.g., the processing system 430 may control another wirelessly-connected device to provide a display of a spatially varying pattern, as described above). In other examples, a spatially varying pattern may be printed on an object in the scene, such as a sheet of paper, a tile, a post, a placemat, a box, an item of clothing, etc. In yet other examples, the landmark may be an object that has a spatially varying pattern by design (e.g., a football goal, a clock face).

The processing system 430 is configured to obtain the video sequence 425 acquired by the camera of each of the plurality of wirelessly-connected devices 420, and to process the video sequences to identify the landmark 440 in each video sequence. In Fig. 4, the processing system obtains the video sequences directly from the plurality of wirelessly-connected devices; however, as the skilled person will readily appreciate, in some examples, the processing system may obtain the video sequences via one or more other devices (e.g., a memory unit). In some examples, the processing system may be configured to obtain and process each frame of each video sequence as the frame is acquired (i.e. the processing system may continuously obtain each video sequence during filming and process each video sequence in real time or near real time).

The landmark 440 may be identified using any suitable recognition algorithm. If the landmark is a 2D pattern that is displayed on a display device or printed on an object, the landmark may be identified as described above. If the landmark is an object having a spatially varying pattern by design, the landmark may be identified using an object recognition algorithm. The processing system 430 may have use a predetermined ordered list of object categories for objects that would be suitable for use as the landmark (i.e. in order of suitability), so that if objects belonging to more than one category are identified in the video sequences, the object belonging to the most suitable category may be identified as the landmark. If more than one object instance belonging to the same category is identified, the processing system may be configured to use a property of the object (e.g. color or texture) to select which object instance is identified as the landmark.

Having identified the landmark 440 in each video sequence 425, the processing system 430 is configured to process the identification of the landmark in each video sequence to determine an initial relative pose of each camera. The processing system may be configured to determine the initial relative pose of each camera as described above with respect to Fig. 1.

In some examples, the processing system may be further configured to process the video sequences 425 and the initial pose of each camera using a structure-from-motion algorithm to determine an updated relative pose for each camera, as described above with respect to Fig. 1.

In some examples, the processing system 430 is configured to process the video sequences 425 to synchronize (i.e., temporally synchronize) the video sequences. The synchronization may be initialized by the identification of the landmark; for instance, the processing system 430 may be configured to "start recording" in response to identifying the landmark in all video sequences, where "start recording" indicates the starting point for the frames of the video sequences that are used for 3D reconstruction.

In some examples, the processing system 430 may be further configured to provide guidance to users of the plurality of wirelessly-connected devices 420. The processing system may be configured to provide guidance using any of the methods described above. For instance, the processing system may be configured to process the video sequences to identify a desired change in pose for at least one of the plurality of wirelessly-connected devices, and, in response to identifying a change in pose for at least one of the plurality of wirelessly-connected devices, control one or more devices to provide a user-perceptible output indicative of each identified desired change in pose.

In some examples, the processing system 430 may be further configured to process the video sequences 425 to identify a desired change in at least one intrinsic parameter of at least one of the plurality of cameras, and to control each wirelessly-connected device for which a desired change in at least one intrinsic parameter has been identified to change the respective at least one intrinsic parameter, as described above.

In some examples, each video sequence 425 is accompanied by an audio signal acquired by one or more microphones of the respective wirelessly-connected device, and the processing system 430 is further configured to process the video sequences and the relative positions of each camera to determine a position of each microphone within the scene, and to process the audio signals, using the determined position of each microphone, to generate an audio mix for a desired position within the scene, as described above.

Fig. 5 illustrates a method 500 for multi-camera capture, according to an embodiment of the invention.

The method 500 begins at step 510, at which a plurality of video sequences of a scene are obtained. Each video sequence is acquired by a respective camera provided in a respective wirelessly-connected device, and each video sequence captures a landmark having a spatially varying pattern.

At step 520, each video sequence is processed to identify the landmark in the video sequence.

At step 530, the identification of the landmark in each video sequence is processed to determine an initial relative pose of each camera.

In some examples, the method 500 may further comprise a step (not shown in Fig. 5) of processing the video sequences to synchronize the video sequences. The synchronization of the video sequences may be initiated by the identification of the landmark.

The method used to synchronize the video sequences may depend on the nature of the landmark: for instance, where the spatially varying pattern is configured to change over time, the video sequences may be synchronized based on the change in the pattern, as described above; where the spatially varying pattern is static, the video sequences may be synchronized by controlling one of the wirelessly-connected devices to display a temporally-modulated indicator and identifying a reflection of the temporally-modulated indicator in the video sequence acquired by each remaining wirelessly-connected device, and/or based on moving features in the scene, the internet clock and/or audio signals associated with the video sequences.

In some examples, the method 500 may further comprise a step (not shown in Fig. 5) of processing the video sequences to identify a desired change in pose for at least one of the plurality of wirelessly-connected devices, and, in response to identifying a change in pose for at least one of the plurality of wirelessly-connected devices, controlling one or more devices to provide a user-perceptible output indicative of each identified desired change in pose. A desired change in pose may be identified using any of the methods described above.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method (300) for multi-camera capture, the method comprising:
generating a spatially varying pattern (140, 210, 220);
controlling a first wirelessly-connected device (110) to provide a display of the spatially varying pattern;
obtaining a plurality of video sequences (125) of a scene containing the first wirelessly-connected device, each acquired by a respective camera provided in a respective further wirelessly-connected device (120), wherein each video sequence captures the display of the spatially varying pattern;
processing each video sequence to identify the display of the spatially varying pattern in the video sequence; and
processing the identification of the display of the spatially varying pattern in each video sequence to determine an initial relative pose of each camera.

2. The method (300) of claim 1, further comprising processing the video sequences (125) to synchronize the video sequences.

3. The method (300) of claim 2, wherein:
the method further comprises controlling the first wirelessly-connected device (110) to provide a change in the spatially varying pattern (140, 210, 220) displayed by the first wirelessly-connected device; and
the step of synchronizing the video sequences (125) comprises:
identifying a frame in each video sequence in which the change in the spatially varying pattern is captured; and
synchronizing the identified frames.

4. The method (300) of claim 3, further comprising processing the identified frames to determine a sub-frame offset between the plurality of cameras.

5. The method (300) of claim 4, further comprising controlling at least one of the plurality of further wirelessly-connected devices (120) to adjust a frame rate of the respective camera based on the determined sub-frame offset.

6. The method (300) of any of claims 2 to 5, wherein the step of synchronizing the video sequences (125) comprises:
controlling one of the plurality of further wirelessly-connected devices (120) to display a temporally-modulated indicator;
processing the video sequence acquired by each remaining further wirelessly-connected device to identify a reflection of the temporally-modulated indicator in the video sequence; and
synchronizing the video sequences based on the identified reflection of the temporally-modulated indicator.

7. The method (300) of any of claims 1 to 6, wherein the spatially varying pattern (140, 210, 220) is a QR code.

8. The method (300) of any of claims 1 to 7, further comprising processing the video sequences (125) and the initial relative pose of each camera using a structure-from-motion algorithm to determine an updated relative pose for each camera.

9. The method (300) of any of claims 1 to 8, further comprising:
processing the video sequences (125) to identify a desired change in pose for at least one of the plurality of further wirelessly-connected devices (120); and
in response to identifying a desired change in pose for at least one of the plurality of further wirelessly-connected devices, controlling one or more devices to provide a user-perceptible output indicative of each identified desired change in pose.

10. The method (300) of claim 9, wherein the desired change in pose for the at least one further wirelessly-connected device (120) is identified based on a desired viewing angle.

11. The method (300) of claim 9 or 10, wherein:
the method further comprises processing the video sequences (125) to identify an object of interest; and
the desired change in pose for the at least one further wirelessly-connected device (120) is identified based on the identified object of interest.

12. The method (300) of any of claims 1 to 11, further comprising:
processing the video sequences (125) to identify a desired change in at least one intrinsic parameter of at least one of the plurality of cameras; and
controlling each further wirelessly-connected device (120) for which a desired change in at least one intrinsic parameter has been identified to change the respective at least one intrinsic parameter.

13. The method (300) of any of claims 1 to 12, wherein:
each video sequence (125) is accompanied by an audio signal acquired by one or more microphones of the respective further wirelessly-connected device (120); and
the method further comprises:
processing the video sequences and the relative positions of each camera to determine a position of each microphone within the scene;
processing the audio signals, using the determined position of each microphone, to generate an audio mix for a desired position within the scene.

14. The method (300) of any of claims 1 to 13, wherein:
the method further comprises:
generating a further spatially varying pattern;
controlling a second wirelessly-connected device to provide a display of the further spatially varying pattern; and
processing each video sequence (125) to identify the display of the further spatially varying pattern in the video sequence; and
the determination of the initial relative pose of each camera is further based on the identification of the display of the further spatially varying pattern in each video sequence.

15. A computer program product comprising computer program code means which, when executed on a computing device having a processing system, cause the processing system to perform all of the steps of the method (300) according to any one of claims 1 to 14.

16. A processing system (130) for multi-camera capture, the processing system being configured to:
generate a spatially varying pattern (140, 210, 220);
control a first wirelessly-connected device (110) to provide a display of the spatially varying pattern;
obtain a plurality of video sequences (125) of a scene containing the first wirelessly-connected device, each acquired by a respective camera provided in a respective further wirelessly-connected device (120), wherein each video sequence captures the display of the spatially varying pattern;
process each video sequence to identify the display of the spatially varying pattern in the video sequence; and
process the identification of the display of the spatially varying pattern in each video sequence to determine an initial relative pose of each camera.
